## Europäisches Patentamt

## European Patent Office

## Office européen des brevets

(19)

(11) Veröffentlichungsnummer: **0 002 847**
**B1**

(12)

# EUROPÄISCHE PATENTSCHRIFT

(45) Veröffentlichungstag der Patentschrift:
**14.07.82**

(51) Int. Cl.³: **B 01 D 35/16**, B 01 D 29/38,
F 26 B 3/06

(21) Anmeldenummer: **78200338.8**

(22) Anmeldetag: **04.12.78**

(54) **Verfahren zur Trocknung von Filterrückständen.**

(30) Priorität: **16.12.77 CH 15500/77**

(43) Veröffentlichungstag der Anmeldung:
**11.07.79 Patentblatt 79/14**

(45) Bekanntmachung des Hinweises auf die Patenterteilung:
**14.07.82 Patentblatt 82/28**

(84) Benannte Vertragsstaaten:
**CH DE FR GB IT**

(56) Entgegenhaltungen:
**CH-A-569 503**
**DE-A-1 812 809**
**DE-A-2 449 203**
**DE-B-1 026 729**
**US-A-1 948 313**

(73) Patentinhaber: **Chemap AG, Alte Landstrasse 415,
CH-8708 Männedorf (CH)**

(72) Erfinder: **Müller, Hans, Dr.-Ing., Im Allmendli,
CH-8703 Erlenbach (CH)**

(74) Vertreter: **Herrmann, Peter, Chemap AG Alte
Landstrasse 415, CH-8708 Männedorf (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Trocknung von Filterrückständen

Die vorliegende Erfindung betrifft ein Verfahren zur Trocknung von Filterrückständen in Kerzenanschwemmfiltern.

Filterrückstände wie beispielsweise Farbstoffe, Pigmente, Metallhydroxide, Katalysatoren und viele andere mehr, müssen häufig im Filter selbst getrocknet werden.

Verfahren zur Trocknung von Filterkuchen auf horizontalen Filterplatten sind bekannt. Nach der DE-A-1 812 809 wird erwärmte Luft oder inertes Gas über die Filtratleitung gedrückt und trocknet auf diese Weise den Filterkuchen beim Durchtritt. Die so auf den Filterelementen getrockneten Filterrückstände werden abgeschleudert und ausgetragen.

Ein Nachteil solcher Verfahren ist häufig ein Zusammenkleben des Filterkuchens im trockenen Zustand und somit eine schwierige Entfernung des Kuchens von der Unterlage sowie ein schwieriges Austragen zu großer Stücke aus dem Filterkessel.

Die gleichen Erscheinungen werden bei der Trockung von Filterkuchen auf Kerzenanschwemmfiltern beobachtet. Durch Druckverlust in der Filterkerze treten hier noch eher Risse im Kuchen auf, wodurch die Trockengase dann über den Weg des geringsten Widerstandes, also direkt durch die Filtermittel entweichen.

Nach der CH-A-569 503 ist ein Verfahren zur Trocknung von vorgetrockneten Filterrückständen in einem Kerzenanschwemmfilter bekannt, welcher aus einem zylindrischen Behälter mit einem konischen Unterteil besteht, dessen Filterelement mit ihrem oberen Teil an Sammelrohren befestigt sind. Die Filterrückstände werden im Unfiltratraum gesammelt und vor dem Austragen durch Einleiten von Luft in nassem Zustand homogenisiert und als feuchtfeste Masse ausgetragen. Eine vollständige Trocknung findet nicht statt.

Aufgabe des erfindungsgemäßen Verfahrens ist es, eine vollständige Trocknung des Filterkuchens innerhalb des Behälters eines Kerzenanschwemmfilters in möglichst kurzer Zeit zu erreichen.

Diese Aufgabe wird erfindungsgemäß durch ein Verfahren gelöst, das dadurch gekennzeichnet ist, daß nach dem Entfernen der durch Luft in Filtrationsrichtung vorgetrockneten Rückstände von den Filterelementen diese Rückstände durch eine hohe Wirbelschicht mit getrocknetem Kreislaufgas Trocknungsgas im durch einen Doppelmantel beheizbaren Konus des Filterbehälters vollständig getrocknet werden.

Der konische Teil des Filterbehälters ist gleichsam als Wirbelbetttrockner ausgebildet.

Als Gas kann Luft oder ein inertes Gas verwendet werden. Die Trocknung der Gase kann in bekannter Weise durch chemische Mittel oder durch Kondensation der darin befindlichen Feuchtigkeit erfolgen. In der Regel genügt erwärmtes Gas, das vor einer Wiederverwendung getrocknet wird.

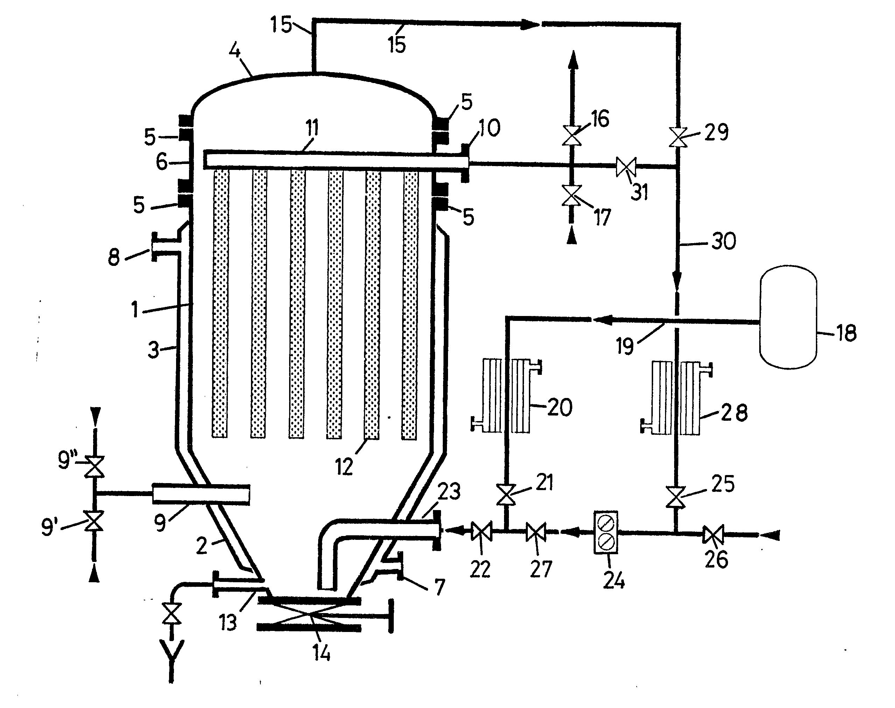

Das Verfahren soll anhand einer Zeichnung näher erläutert werden. Die einzige Figur stellt ein Fließbild im Längsschnitt durch den Behälter eines Kerzenanschwemmfilters dar. Der Filter besteht aus einem zylindrischen Behälter 1 mit einem konischen unteren Teil 2 und kann mit einem Doppelmantel 3 versehen sein. Der Behälter 1 ist mit einem Deckel 4 über einen durch Flansche 5 befestigten, abnehmbaren Zwischenring 6 verschlossen. Der Mantel 3 des Behälters 1 weist einen Eingangsstutzen 7 und einen Austrittsstutzen 8 für ein Heiz- oder Kühlmedium auf. Ein Eintrittsrohr 9 für die zu filtrierende Suspension ist im konischen Teil des Kessels 1 vorgesehen. Ein Ventil 9' dient zum Absperren des Trübezulaufs, ein Ventil 9'' zum Absperren einer Gaszufuhr. Ein Austrittsstutzen 10 für das Filtrat setzt sich nach innen über ein Sammelrohr 11 fort. An einem oder mehreren solchen Sammelrohren 11 sind Filterkerzen 12 in bekannter Weise befestigt. Eine Drainageleitung 13 befindet sich unmittelbar über einem Schieber 14 für den Trockenproduktaustritt. Im Deckel 4 des Behälters 1 befindet sich eine Abgasleitung 15, die über ein Ventil 29 und ein Leitungsstück 30 zum Wärmeaustauscher 28 führt. Die Zufuhr von Gas kann über ein Ventil 25 oder ein Ventil 26 auf ein Gebläse 24 erfolgen. Ein Gaseintrittstutzen 23 führt mit seiner Öffnung gegen den Schieber 14. Ein Hochdruckgasbehälter 18 ist über eine Leitung 19 mit einem Wärmeaustauscher 20 verbunden. Die Ventile 21, 22 und 27 dienen zum Absperren oder Drosseln der Gaszufuhr.

Die Filtration erfolgt durch Eintragung der Trübe mittels einer nicht gezeigten Pumpe über den Eintrittstutzen 9. Die Feststoffe lagern sich auf den Filterkerzen 12 ab, das Filtrat verläßt aus dem Innenraum der Filterkerze 12 über die Sammelleitung 11, den Stutzen 10 und das Ventil 16 den Filterbehälter 1. Nach beendeter Filtration werden die Rückstände zunächst in Filtrationsrichtung durch die Filterkerze 12 selbst vorgetrocknet. Zu diesem Zweck wird warme Luft oder ein Gas aus dem Druckbehälter 18 über eine Rohrleitung 19 via Heizelement 20, Ventile 21, 22 und das Anschlußrohr 23 in den Filterbehälter 1 und durch den Filterkuchen, der sich auf den Kerzen 12 befindet, gedrückt. Die mit Flüssigkeitsdämpfen beladene Luft entweicht über die Sammelleitung 11, den Austrittstutzen 10 und das geöffnete Ventil 17. Die so vorgetrockneten Rückstände werden durch Gegenstrom mittels Druckluft oder durch Druckluftstöße über das Ventil 17 von den Filtermitteln der Filterkerzen 12 entfernt und fallen in den Raum des konischen Filterkesselteiles.

Nach dem Entfernen der Filterrückstände wird vorgetrocknetes Kreislaufgas oder Luft über das Ventil 25 oder vorgewärmtes Frischgas oder Frischluft über das Ventil 26, das Gebläse 24, die Ventile 27, 22 und das Rohr 23 dem Boden des Filterkessels 1 zugeführt. Hierdurch werden die von den Kerzen 12 abgefallenen Rückstände aufgewirbelt. Es findet so eine Nachtrocknung in hoher Wirbelschicht statt, welche durch die große Schichtdicke der Rückstände sehr wirtschaftlich vor sich geht, indem die Trocknungsgase mit Flüssigkeit gesättigt werden.

Je nach Feuchtigkeitsgehalt können die Trocknungsgase über das Gebläse 24 rückzirkuliert werden, und zwar via Wärmeaustauscher 28 durch die Filterkerzen 12 hindurch oder auch außerhalb der Kerzen über die Leitung 15 und das Ventil 29. Die Rezirkulation außerhalb der Kerzen 12 ist möglich durch die spezielle Aufhängung der Kerzen an den Sammelrohren sowie durch Schließen der Ventile 16, 17 und 31.

Das Trocknungsgas kann vor dem Aufheizen selbst getrocknet werden, entweder durch Absorption oder Kondensation. Die Trocknungsluft kann auch über eine Siebplatte erfolgen, wodurch eine gleichmäßigere Verteilung erzielt wird.

## Patentansprüche

1. Verfahren zur Trocknung von vorgetrockneten Filterrückständen in einem Kerzenanschwemmfilter, bestehend aus einem zylindrischen Behälter (1) mit einem konischen unteren Teil (2), dessen Filterelemente mit ihrem oberen Teil an Filtratsammelrohren befestigt sind, dadurch gekennzeichnet, daß nach dem Entfernen der durch Luft in Filtrationsrichtung vorgetrockneten Rückstände von den Filterelementen (12) diese Rückstände durch eine hohe Wirbelschicht mit getrocknetem Kreislaufgas (Trocknungsgas) im durch einen Doppelmantel (3) beheizbaren Konus des Filterbehälters (1) vollständig getrocknet werden.

2. Verfahren nach Patentanspruch 1, dadurch gekennzeichnet, daß das Trocknungsgas über eine Gasleitung (23), dessen Öffnung gegen den Schieber (14) weist, in den unteren Behälterteil strömt.

3. Verfahren nach den Patentansprüchen 1 und 2, dadurch gekennzeichnet, daß das Trocknungsgas vor dem Eintritt in den Konus des Filterbehälters (1) über Wärmeaustauscher (20, 28) erwärmt wird.

4. Verfahren nach Patentanspruch 1, dadurch gekennzeichnet, daß das Gas zur gleichmäßigen Verteilung über eine Siebplatte im unteren Teil des Konus eingeführt wird.

## Claims

1. Process for drying pre-dried filter residues in a precoat candle filter, which consists of a cylindrical vessel (1) with a conical lower portion (2), whose filter elements, which are fixed at their upper end, to manifold filtrate-collector pipes, characterised by the fact that the filter residues, pre-dried by air blown through them in the direction of the filtration are totally dried on removal from the filter elements (12) are totally dried by fluidization in the fluidized layer in the heatable, jacketed (3) conical section of the filter vessel (1), fluidization being effected by dried recycled drying gas.

2. Process according to claim 1, characterised by the fact that the drying gas which flows through a gasline (23) the open end of which points toward gate valve (14), streams into the lower portion of the vessel.

3. Process according to claims 1 and 2, characterised by the fact that the drying gas, before it enters the conus of the filter vessel (1) is heated by heat exchangers (20, 28).

4. Process according to claim 1, characterised by the fact that the gas, for its even distribution is introduced into the lower portion of the conus, via a perforated plate or sieve.

## Revendications

1. Procédé pour le séchage de résidus préséchés de filtration, dans un filtre à bougies de terre diatomée, composé, d'un récipient cylindrique (1), d'une partie inférieure cônique (2), dont les éléments filtrants sont fixés sur la partie supérieure aux tuyaux collecteurs de filtrat, caractérisé en ce qu'après avoir séparé les résidus préséchés avec de l'air dans la direction de la filtration des éléments filtrants (12) ces résidus sont séchés complètement en les mettant en suspension par création d'un haut tourbillon à l'aide d'un gaz préséché et récyclé (gaz de séchage) dans la partie inférieure conique (2) chauffée par la double parois (3) du récipient cylindrique (1).

2. Procédé selon la revendication 1, caractérisé en ce que la gaz de séchage est envoyé au travers d'une conduite tubulaire (23), dont l'ouverture est dirigée vers la vanne à guillotine (14), dans la partie inférieure de la cuve.

3. Procédé selon la revendication 1 et 2, caractérisé en ce que la gaz de séchage est réchauffé dans un échangeur de chaleur (20, 28).

4. Procédé selon la revendication 1, caractérisé en ce que le gaz est au but d'une distribution homogène introduit dans la partie inférieure du cône au travers d'une plaque perforée.

0 002 847